# EUROPEAN PATENT SPECIFICATION

(11) **EP 2 258 548 B1**
(45) Date of publication and mention of the grant of the patent: **11.06.2014**
(21) Application number: 09718820.5
(22) Date of filing: 10.03.2009
(51) Int. Cl.: B32B 27/32, B29C 49/22, B29C 49/64, B32B 27/00, B29K 23/00, B29K 67/00, B29L 9/00, B29L 22/00, B29C 47/00, B29C 47/06, B29C 47/22, B32B 27/08, B32B 27/28, B32B 27/30, B32B 27/36, B32B 1/02, B32B 1/08, B65D 1/02

(54) **MOLDED BODY OF LAMINATED PLASTIC DERIVED FROM BIOMASS, AND MANUFACTURING METHOD THEREFOR**
FORMKÖRPER AUS LAMINIERTEM KUNSTSTOFF AUS BIOMASSE UND HERSTELLUNGSVERFAHREN DAFÜR
CORPS MOULÉ EN MATIÈRE PLASTIQUE STRATIFIÉE DÉRIVÉE D'UNE BIOMASSE, ET SON PROCÉDÉ DE FABRICATION

(30) Priority: 10.03.2008 JP 2008060035
(43) Date of publication of application: 08.12.2010
(73) Proprietor: Heiwa Kagaku Industry Co., Ltd., Chiba 272-0004 (JP)
(72) Inventor: HATAKEYAMA, Kazuyuki, Ichikawa-shi Chiba 272-0004 (JP); HATAKEYAMA, Harumasa, Ichikawa-shi Chiba 272-0004 (JP)
(74) Representative: Jones, Helen M.M.
(86) International application number: PCT/JP2009/054495
(87) International publication number: WO 2009/113515

(56) References cited:
- EP-A1- 1 264 860
- EP-A1- 1 839 849
- EP-A1- 1 867 679
- EP-A2- 1 652 876
- JP-A- 8 073 628
- JP-A- 9 263 651
- JP-A- 10 120 887
- JP-A- 2001 225 430
- JP-A- 2004 035 691
- JP-A- 2004 338 185
- JP-A- 2007 160 653
- JP-A- 2008 081 585
- DATABASE WPI Week 200746 Thomson Scientific, London, GB; AN 2007-472787 XP002697092, & JP 2007 145912 A (TOYOTA JIDOSHA KK) 14 June 2007 (2007-06-14)
- DATABASE WPI Week 200245 Thomson Scientific, London, GB; AN 2002-419855 XP002697093, & JP 2002 011778 A (PAL MANEKIN KK) 15 January 2002 (2002-01-15)

## Description

### FIELD OF THE INVENTION

The present invention relates to molded bodies of laminated plastic derived from biomass that have improved hear-resistance, impact-resistance, and surface smoothness, and manufacturing methods therefore.

### BACKGROUND ART

Plastics are a material extravagantly used in a variety of industrial fields, and after wasted and trashed, they are prone to lead to serious environmental problems; i.e., blotting the landscape, adversely effecting marine animals, globally contaminating the natural environment, and so forth.

So far, commercially available resins of petrol-derived substances include polyethylene, polypropylene, polyvinyl chloride, polyethylene terephthalate, and the like, and wastes of such resins have been finally incinerated or buried under the ground.

However, such a manner of disposal is dubious to stir up public opinion as an environmental issue. For instance, the wastes of polyethylene, polypropylene, and polystyrene resins emit excessive calories of heat while they are burning, which unavoidably damages incinerators and shorten their lifetime. The wastes of polyvinyl chloride, which emit heat not so much in calorie, develop toxic gaseous byproducts while incinerated.

As with the undersurface dumping, the above-identified resins of the petrol-derived substances semi-eternally residue without being slightly decomposed and degraded since they are chemically stable, which results in another serious trouble of insufficient trash dumps or prospective landfills to deposit such wastes.

Similarly, when any of the resins made of petrol-derived substances is dumped in the natural environment, its significant chemical stability becomes a cause to destruct the environment, namely, to long-lastingly blot the landscape, feed marine and avian animals on indigestible things harmful to their health, and so on.

In order to cope with the aforementioned troubles, recently biodegradable polymers have been intensively developed. Several of such biodegradable plastics are expected for practical use in near future, including aliphatic polyesters, denatured PVAs (polyvinyl alcohols), cellulose ester compounds, denatured starches, and various mixtures thereof.

Among the aliphatic polyesters, polylactic-acid polymers are currently of greater concern as one of semi-synthetic polymers.

Biomass-derived resins primarily made of plant materials are advantageous in view of an idea of saving the natural environment since almost no petrol-derived substance is used to fabricate them, and especially, PLA resins among such biomass-derived resins have a superb biodegradability and is reputably recognized as being a material suitably processed by molding techniques.

However, the biomass-derived resins are generally insufficient in strength and unsatisfying in heat-resistance, and they should be improved to meet requirements for practical use in the industries. Specifically, the biomass-derived resins have features of lower fusing point and glass-transition point as well as lower crystallizing point of their intermediate phase between the two extreme temperature points, and they further have a tendency to be crystallized lingeringly.

For instance, the polylactic acids are approximately 170°C in fusing point, approximately 110°C in crystallizing point, and approximately 57 °C in glass-transition point. Thus, although highly moldable, the polylactic acids are crystallized too slowly to solidify into a crystalline phase during the ordinary molding process. In this way, admittedly the polylactic acids are categorized in crystalline polymers, but their moldings or molded products resist heat of the temperature lower than their glass-transition point.

Plastic bottles thus fabricated are to encounter varied temperature of the ambient air ranging from -20 to 50 °C during the ordinary use. The bottles are hermetically sealed and isolated from the ambient air to preserve the contents from any of its influences, and without rigidity, the bottles deform when exposed to thermal expansion/reduction of the contents therein as a result of varied temperature of the ambient air. So far as they are sold as commercial products, containers keeping any of cosmetic preparation, drug, and food therein must not deform because consumers should think that resin components may elute into the contents and/or that the hermetical seal may be broken.

While they keep hermetically sealed, the bottles blow-molded out of polylactic acid material, namely, one typical biomass-derived plastic have their inner pressure raised as temperature of the ambient air rises; and specifically, they deform when left in the environment at 50°C for two hours.

It is well known in the art that when they undergo a crystallization accelerating treatment, the biomass-derived resins can have their shock-and heat-resistance properties enhanced. Several well-known technical manners of the crystallization accelerating treatment will be described below.

In one approach, powdered nucleator such as talc, silica, calcium lactate or the like may be added to the biomass-derived resin prepared for the injection-molding (e.g., see Patent Document 1 listed below).

Another approach is injection-molding with a die retained at a crystallizing temperature point to accelerate resin blank's crystallization (see Patent Document 2), and there is still another approach where sheet resin blank undergoes the primary vacuum/pressure forming, and thereafter, it further undergoes the secondary treatment of annealing so as to accelerate the resultant molding's crystallization (see Patent Document 3).

In further another approach, injection-molded resin blank is annealed in the secondary treatment to accelerate its crystallization where the resin blank is composed of polylactic acid (PLA), polypropylene (PP) having weight-average molecular weight of 100,000 or even greater, and inorganic filler to render the resin composite suitable to producing molded products of highly refined design with a deeply light-absorbing silkiness and a matte finish (see Patent Document 4).

In yet another approach that implements an invention or a method of fabricating a biomass-derived resin molding where a resin preform injection-molded in the primary treatment is annealed in the secondary treatment to accelerate its crystallization, mixture of biomass-derived resin with petrol-derived resin is injected and filled in a die 5 retained at temperature lower than the crystallizing point of the biomass-derived resin and also lower than the glass-transition point of the same, and thereafter, the mixture is cooled down and solidified to obtain biomass-derived resin molding(s). The method also includes a step of releasing the molded preform 1 (housing) from the die 5 and a succeeding step of annealing and crystallizing the molded resin 1 while the molded preform is fixedly held in positions where accuracy of form and size is emphatically required for the resultant molded product(s) (see Patent Document 5).

In an additional approach, material such as polylactic acid is heated by infrared rays, so as to drastically shorten the processing time till the desired heat-resistance is attained, compared with the prior art annealing methods where heated air is blown (see Patent Document 6).

Patent Document 1 - Japanese Patent Publication of Unexamined Application No. H08-193165
Patent Document 2 - Japanese Patent Publication of Unexamined Application No. 2005-74791
Patent Document 3 - Japanese Patent Publication of Unexamined Application No. H08-73628
Patent Document 4 - Japanese Patent Publication of Unexamined Application No. 2007-145912
Patent Document 5 - Japanese Patent Publication of Unexamined Application No. 2007-160653
Patent Document 6 - Japanese Patent Publication of Unexamined Application No. 2004-359763

Document EP 1 652 876 A2 teaches a method of manufacturing biomass-derived plastic laminated molding by extrusion blow forming, wherein a preform is molded out of plastic in laminated shape having at least one layer composed of polylactic acid and layers composed of polyolefin resins, wherein the plastic preform is treated.

Document EP 1 264 860 A1 relates to resin compositions comprising a biodegradable polylactic acid resin used to produce molded articles, wherein a preform of this resin and a blow molding machine is used.

### DISCLOSURE OF THE INVENTION

### PROBLEMS TO BE SOLVED BY THE INVENTION

The approach of adding nucleator as disclosed in Document 1 is somewhat effective in accelerating the crystallization to some extent and reasonably useful with only a reduced load (Flexural Modulus 0.45MPa in deformation test under load in conformity with ASTM D468), but it is inevitable that the hermetically sealed bottles fabricated in this manner deform depending upon the load applied to them.

The approach of using a die to accelerate the crystallization as set forth in Document 2 is the most effective in accelerating the crystallization, but the bottles fabricated in this manner is fragile and non-durable against impact that the daily use at home forces them to be exposed to.

Shaped products such as bottles fabricated by the blow-molding still have residual stress resulted from the drawing in the course of molding, and hence, annealing as disclosed in Documents 3 and 4 causes the molded blank to deform in the midst of the treatment.

Unlike the methods as in Documents 3 and 4, the approach in Document 5 devises how to avoid exposing molded blank to heat exceeding to the crystallizing point in the primary part of the molding process, trading for no acceleration of resin's crystallization as well as no improvement of its heat-resistance, and further instead, an additional step of gradually cooling the resultant molding(s) down at a rate of 5 °C/min is required to avoid deformation during the cooling process, which leads to an increase in the manufacturing cost.

The approaches of accelerating the crystallization as in Documents 1 to 5 finish the products all having a matte surface, and are not able to render them a lustrous and glossy finish.

Document 6 teaches a way in which substances such as polylactic acid can be thermally processed for the reduced period of time by means of infrared rays, but it is disadvantageous in that the resultant blow-molded bodies such as bottles are apt to deform when rapidly heated.

Typically, in order to fabricate shaped products such as bottles by blow-molding, unlike those fabricated by injection-molding, parison (i.e., preliminarily molded blank) is to be drawn while being cooled down till it has its circular length approximately tripled (or doubled to quintuplicated as desired). This is because the resultant molding still has residual stress, and additionally, since air blown in during the drawing results in the molded product being unavoidably uneven in thickness. As a consequence, the parison is prone to deform unevenly when re-heated during the secondary treatment such as annealing. Especially, bottles keeping cosmetic preparation, drug, or food therein are to have their respective middle barrel portions typically thinned down to 0.2 to 1.5 mm, and the blow-molded bottle-shaped parison is likely to deform when annealed.

### <Object of the Invention>

The present invention is made to overcome the aforementioned problems in the prior art biomass-derived plastic laminated molding and methods of manufacturing the same, and accordingly, it is an object of the present invention to provide the improved biomass-derived plastic laminated molding such as a bottle(s) that does not deform under load when hermetically sealed and that has the enhanced high-impact property, and also to provide the improved method of manufacturing the same.

It is another object of the present invention to provide the improved biomass-derived plastic laminated molding that has no or a very little residual stress, and hence, does not deform during the fabricating process, and the improved method of manufacturing the same.

It is still another object of the present invention to provide the improved biomass-derived plastic laminated molding that is thoroughly crystallized without even a point exceptionally left non-crystalline and that accordingly does not have a matte surface but instead has a lustrous and glossy finish, and to provide the improved method of manufacturing the same.

It is further another object of the present invention to provide the improved biomass-derived plastic laminated molding that gains heat-resistance without losing elasticity, and the improved method of manufacturing the same.

### MEANS TO SOLVE THE PROBLEMS IN THE PRIOR ART

The present is directed to a biomass-derived plastic laminated molding fabricated by blow-forming, **characterized in that** a preform is molded out of plastic in laminated shape so as to have at least one of layers composed of biomass-derived plastic by 25 wt% or over and the remaining layers composed of polyolefin resins, and that the plastic preform undergoes annealing where it is exposed to blown air heated to raise temperature at a rate of 5 to 20 °C/min from the room temperature up to 85 to 100 °C at which the preform is left for 3 to 10 minutes, and thereafter, the blown air is gradually cooled down at the rate of 10 to 15 °C/min.

The present invention is directed to a method of manufacturing biomass-derived plastic laminated moldings by blow-forming in which a preform is molded out of plastic in laminated shape so as to have at least one of layers composed of biomass-derived plastic by 25 wt% or over and the remaining layers composed of polyolefin resins, and that the plastic preform is exposed to blown air heated to raise temperature at a rate of 5 to 20 °C/min from the room temperature up to 85 to 100 °C at which the preform is left for 3 to 10 minutes, and thereafter, the blown air is gradually cooled down at the rate of 10 to 15 °C/min.

### EFFECT OF THE INVENTION

In accordance with the present invention, the biomass-derived plastic laminated molding, which is shaped in bottle(s) hermetically sealed, does not deform under load and has their high-impact property enhanced, and the manufacturing method of the invention enables to fabricate such plastic molded bodies.

Also, in accordance with the present invention, the biomass-derived plastic laminated molding has no or a very little residual stress and does not deform in the course of the manufacturing process, and the manufacturing method of the invention enables to fabricate such plastic molded bodies.

Further, in accordance with the present invention, the biomass-derived plastic laminated molding is thoroughly crystallized without even a point exceptionally left non-crystalline and does not have a matte surface but instead have a lustrous and glossy finish, and the manufacturing method of the invention enables to fabricate such plastic molded bodies.

Furthermore, in accordance with the present invention, the biomass-derived plastic laminated molding gains heat-resistance without losing elasticity, and the manufacturing method of the invention enables to fabricate such plastic molded bodies.

### BEST MODE TO IMPLEMENT THE INVENTION

Preferred embodiments of a biomass-derived plastic laminated molding and a method of manufacturing the same according to the present invention will now be described in conjunction with the accompanying drawings.

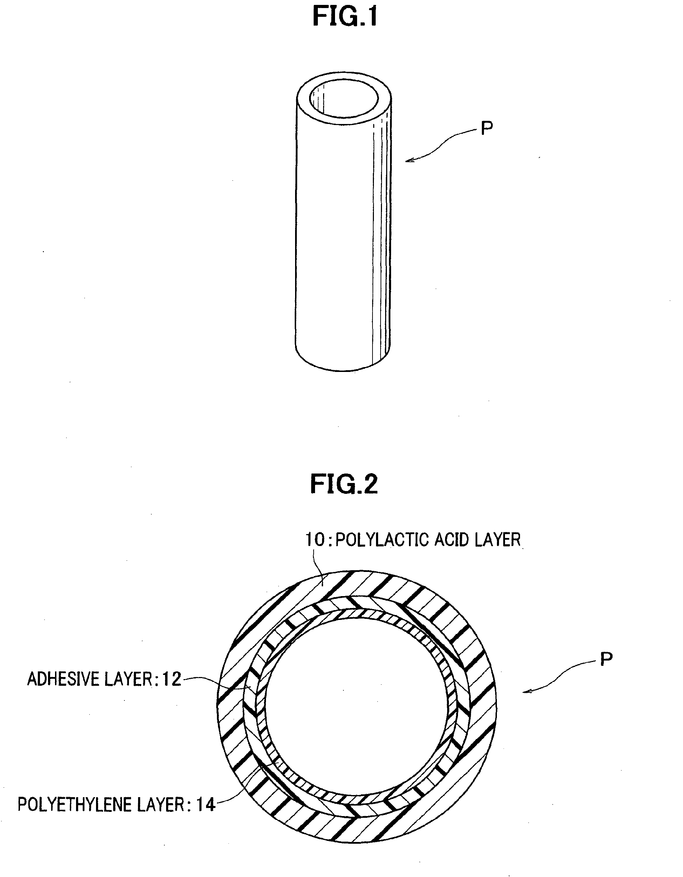

In the manufacturing method of a biomass-derived plastic laminated molding, first of all, a parison P, namely, preliminarily molded blank is prepared. As shown in Fig. 1, the parison P is shaped in pipe by extrusion-molding. The parison P has its lower end closed and its upper end left open. The first form of the parison P has a cross-section, as shown in Fig. 2, in which a three-layer configuration is comprised of an outer layer or polylactic acid layer 10, an intermediate layer or adhesive layer 12, and an inner layer or polyethylene layer 14. The adhesive layer 12 is of adhesive resin such as denatured polyolefin, vinyl acetate, or the like. The parison P has its pipe-shaped portion as thin as 2 mm, for example.

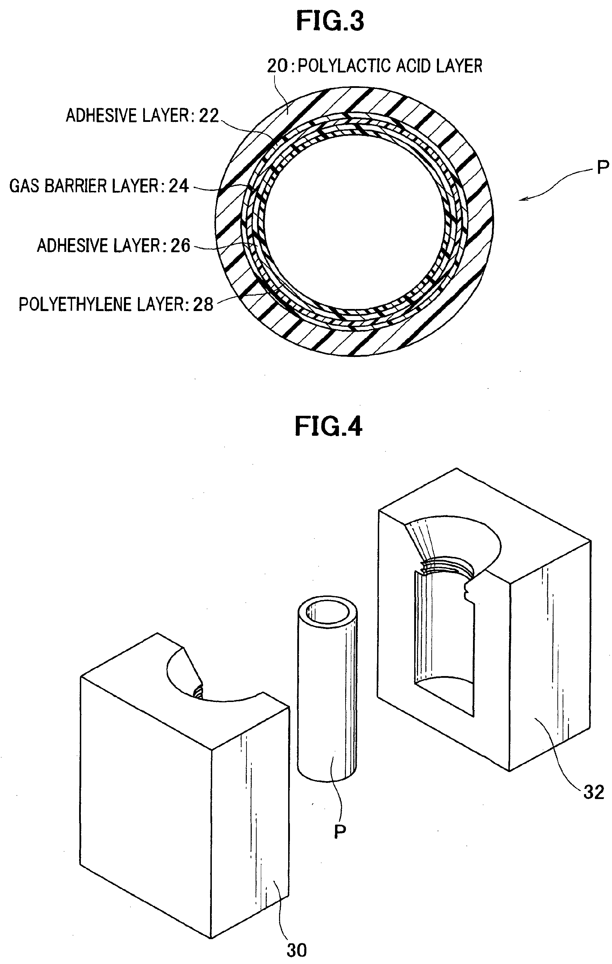

The second form of the parison P has a cross-section, as shown in Fig. 3, in which a five-layer configuration is comprised of the outermost layer or polylactic acid layer 20, the second outermost layer or adhesive layer 22, an intermediate layer or gas barrier layer 24, the second innermost layer or adhesive layer 26, and the innermost layer or polyethylene layer 28. The gas barrier layer 24 is of copolymer of ethylene and vinyl alcohol. The adhesive layers 22 and 26 are of adhesive resin such as denatured polyolefin, vinyl acetate, or the like. The parison P has its pipe-shaped portion as thin as 2 mm, for example.

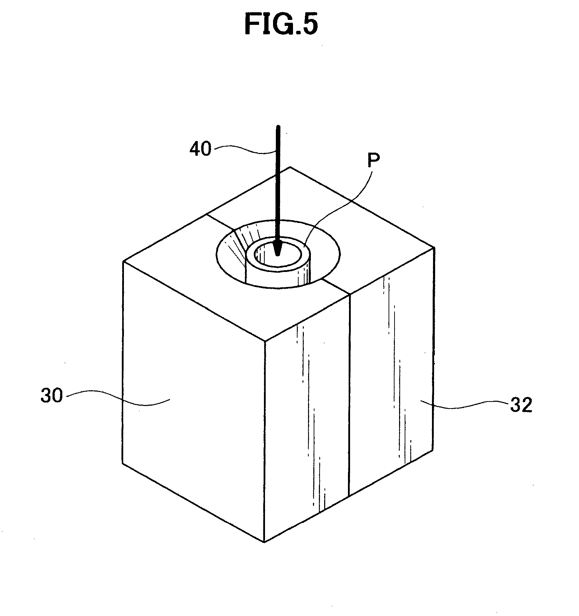

As can be seen in Fig. 4, the parison P is interposed between blow mold members 30 and 32 that are cooled down to approximately 20 °C and separated from each other to stay open. After that, the blow bold members 30 and 32 are coupled together and closed as shown in Fig. 5. Then, as indicated by arrow 40 in Fig. 5, air is blown from an upper open end of the parison P.

Next, the blow mold members 30, 32 are disconnected and opened up to remove plastic molding M. The plastic molding M has an outer diameter of 60 mm and a height of 150 mm, for example.

### <Properties of the Finished Molding>

The parison assuming the first form undergoes blow-molding under the similar conditions to those in the typical olefin resin molding process to shape it in a three-layer bottle (capacity of 300 ml, blow ratio of approximately 3, and average thickness in the barrel portion of 0.7 mm).

Lamination configuration of the bottle is as follows:
- Outer layer of plastic that is composed of polylactic acid by 70 wt% or greater and styrene resin by 30 wt% or less;
- Intermediate layer of adhesive resin; and
- Inner layer of polyethylene.

The plastic molding M is annealed in a constant temperature furnace under the conditions as detailed in the following Table 1:

**Table 1**

| | Heat-up Rate | Peak Temperature (PT) | Retention Time of PT | Cool-down Rate |
|---|---|---|---|---|
| A | 5°C/min | 75°C | 10 min | 5°C/min |
| B | 5°C/min | 80°C | 10 min | 5°C/min |
| C | 5°C/min | 85°C | 10 min | 5°C/min |
| D | 5°C/min | 90°C | 10 min | 5°C/min |
| E | 5°C/min | 95°C | 10 min | 5°C/min |
| F | 5°C/min | 100°C | 10 min | 5°C/min |
| G | 5°C/min | 105°C | 10 min | 5°C/min |
| H | 5°C/min | 110°C | 10 min | 5°C/min |

As a result of the annealing, samples G and H were observed to deform; that is, they had a recess caused by the residual stress from the drawing process. Samples A to F, each filled with tap water of 275 ml and sealed by a cap, undergo 48-hour heat test at 50 °C in the constant temperature furnace, and resultantly, the samples A and B deformed not to stand erect because the bottles had their bottom and shoulders swollen. The samples C, D, E and F did not deform so much as might be put down as being miscreate or functionally incompetent.

In view of the test results, the inventors concluded that the optimum temperature to anneal or crystallize the blow-molded bottles (blow ratio of approximately 3, and average thickness in the barrel portion of 0.7 mm) is 85 to 100 °C.

After that, additional annealing treatment was carried out to specify the optimum peak temperature retention time. The plastic molding M was annealed in the constant temperature furnace under the conditions as detailed below in Table 2:

**Table 2**

| | Heat-up Rate | Peak Temperature (PT) | Retention Time of PT | Cool-down Rate |
|---|---|---|---|---|
| A | 5°C/min | 90°C | 1 min | 5°C/min |
| B | 5°C/min | 90°C | 3 min | 5°C/min |
| C | 5°C/min | 90°C | 5 min | 5°C/min |
| D | 5°C/min | 90°C | 7 min | 5°C/min |
| E | 5°C/min | 90°C | 10 min | 5°C/min |
| F | 5°C/min | 90°C | 15 min | 5°C/min |

None of the samples A to F was observed to deform. For each of the samples A to F, the bottle was filled with tap water of 275 ml and sealed by a cap. As a result of 48-hour heat test at 50 °C in the constant temperature furnace, the sample A deformed not to stand erect because the bottle had its bottom and shoulders swollen. The remaining samples B, C, D, E and F deformed not so much as might be put down as being miscreate or functionally incompetent.

Each of the samples C, D, E and F further underwent impact resistance test by dropping the bottle (full of tap water and sealed by a cap) from a point as high as 1 m down on the concrete floor, and only the sample F had its bottom cracked.

In view of the test results, the inventors concluded that the retention time of the peak temperature during annealing the blow-molded bottles should be 3 to 10 minutes, allowing for the heat-resistance and high-impact properties and productivity desired for the resultant bottle products.

The samples are further annealed to specify the optimum heat-up rate.

**Table 3**

| | Heat-up Rate | Peak Temperature (PT) | Retention Time of PT | Cool-down Rate |
|---|---|---|---|---|
| A | 5°C/min | 90°C | 5 min | 5°C/min |
| B | 10°C/min | 90°C | 5 min | 5°C/min |
| C | 20°C/min | 90°C | 5 min | 5°C/min |
| D | 30°C/min | 90°C | 5 min | 5°C/min |
| E | 40°C/min | 90°C | 5 min | 5°C/min |
| F | 60°C/min | 90°C | 5 min | 5°C/min |

The samples A, B and C were not observed to deform due to the annealing. The samples D and E slightly deformed, and the sample F also somewhat deformed, appearing as a recess caused by the residual stress from the drawing process.

For each of the samples A, B and C, the bottle is filled with tap water of 275 ml and sealed by a cap. As a result of 48-hour heat test at 50 °C in the constant temperature furnace, none of the samples A, B and C was observed to deform so much as might be put down as being miscreate or functionally incompetent. All the samples A, B and C, when subjected to impact resistance test, caused no crack.

From the test results, the inventors concluded that the optimum heat-up rate is 5 to 20 °C per minute.

Moreover, the samples were annealed to specify the optimum cool-down rate.

**Table 4**

| | Heat-up Rate | Peak Temperature (PT) | Retention Time of PT | Cool-down Rate |
|---|---|---|---|---|
| A | 10°C/min | 90°C | 5 min | 1°C/min |
| B | 10°C/min | 90°C | 5 min | 5°C/min |
| C | 10°C/min | 90°C | 5 min | 10°C/min |
| D | 10°C/min | 90°C | 5 min | 15°C/min |
| E | 10°C/min | 90°C | 5 min | 20°C/min |
| F | 10°C/min | 90°C | 5 min | Quenched by Running Water |

None of the samples A to F deformed due to the annealing. For each of the samples A to F, the bottle filled with tap water of 275 ml and sealed by a cap underwent 48-hour heat test at 50 °C in the constant temperature furnace. None of the samples A, B, C and D was observed to deform so much as might be put down as being miscreate or functionally incompetent. The samples E and F deformed.

In view of the test results, the inventors concluded that the optimum cool-down rate after annealing the blow-molded bottles is 10 to 15 °C/min, allowing for the heat-resistance and high-impact properties and productivity desired for the resultant bottle products.

The inventors drew a final conclusion from their reviews on the test results that in blow-molding bottles out of biomass-derived plastics, it is desirable annealing shaped blank under the following conditions in order to enhance the heat-resistance property of the bottle products without degrading the high-impact property; that is, the blown air should be heated to raise temperature at a rate of 5 to 20 °C/min from the room temperature up to 85 to 100 °C at which the blank is left for 3 to 10 minutes, and thereafter, the blown air should be gradually cooled down at a rate of 10 to 15 °C/min.

Typically, crystalline polymers lack a surface smoothness as they are crystallized, and as can be seen in Document 5, the crystallized polymers are apt to have a matte finish free from luster. However, annealing the crystalline polymers in accordance with the present invention enables the resultant products to have a more smooth and even surface with added luster, compared to the surface prior to the annealing treatment.

### BRIEF DESCRIPTION OF THE DRAWINGS

Fig. 1 is a perspective view of a preferred embodiment of a parison according to the present invention;
Fig. 2 is a cross-sectional view of the first form of the parison;
Fig. 3 is a cross-sectional view of the second form of the parison;
Fig. 4 is a perspective view showing a blow mold being opened up before a molding process;
Fig. 5 is a perspective view showing the blow mold being closed;

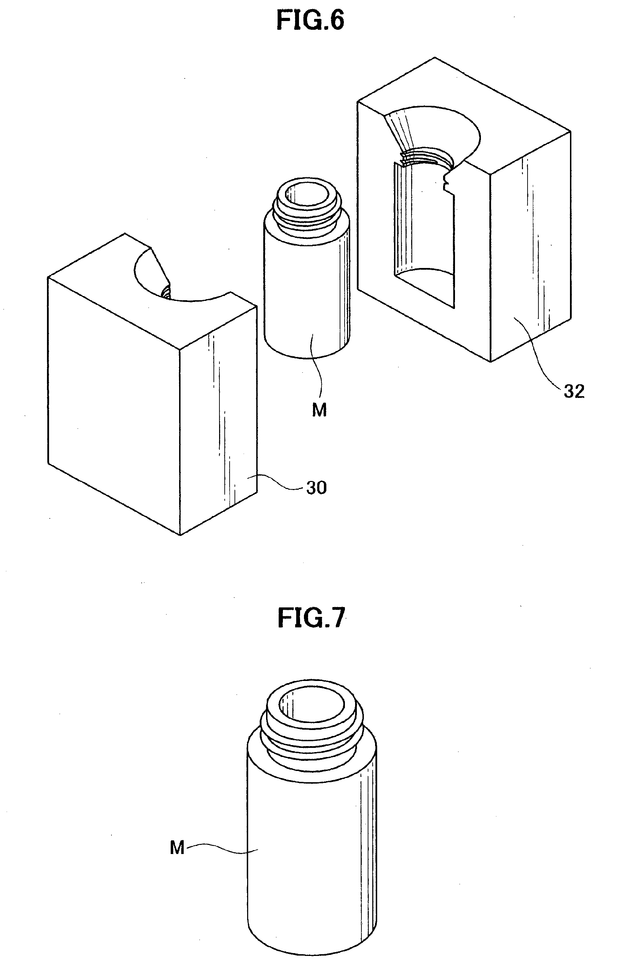

Fig. 6 is a perspective view showing the blow mold being opened up after the molding process; and
Fig. 7 is a perspective view showing a plastic molding resulted from the preferred embodiment according to the present invention.

### DESCRIPTION OF REFERENCE ALPHANUMERIC SYMBOLS

- P: Parison
- M: Plastic Molding
- 10: Polylactic Acid Layer
- 12: Adhesive Layer
- 14: Polyethylene Layer
- 20: Polylactic Acid Layer
- 22: Adhesive Layer
- 24: Gas Barrier Layer
- 26: Adhesive Layer
- 28: Polyethylene Layer

## Claims

1. A method of manufacturing biomass-derived plastic laminated molding by extrusion blow forming, **characterized in that** a preform is molded out of plastic in laminated shape so as to have at least one of layers composed of polylactic acid by 25 wt% or over and the remaining layers composed of polyolefin resins, and that the plastic preform undergoes annealing **characterised in that** during annealing the plastic preform is exposed to blown air heated up at a rate of 5 to 20 °C/min from the room temperature up to 85 to 100 °C at which the preform is left for 3 to 10 minutes, and thereafter, the blown air is gradually cooled down at the rate of 10 to 15°C/min.

2. The method of manufacturing a biomass-derived plastic laminated molding according to claim 1, wherein the plastic preform is comprised of inner and outer layers, the outer layer being composed of polylactic acid by 25 wt% or over while the inner layer is of polyolefin resin.

3. The method of manufacturing a biomass-derived plastic laminated molding according to claim 1 or claim 2, wherein the polyolefin resins include polyethylene, polypropylene, polyethylene-propylene, and the like.

4. The method of manufacturing a biomass-derived plastic laminated molding according to claim 1 or claim 2, wherein the biomass-derived plastic molding is a bottte(s).

5. The method of manufacturing a biomass-derived plastic laminated molding according to any preceding claim, further comprising one or more adhesive layers.

## Patentansprüche

1. Verfahren zur Herstellung eines laminierten, auf Biomasse basierendem Kunststoff-Formkörpers durch Extrusionsblasen, **dadurch gekennzeichnet,**
**dass** ein Vorformling in laminierter Form aus Kunststoff geformt wird, sodass mindestens eine der Schichten aus Polymilchsäure mit 25 Gew.-% oder mehr zusammengesetzt ist und die verbleibenden Schichten aus Polyolefinharzen zusammengesetzt sind,
und
**dass** der Kunststoffvorformling einem Tempern unterzogen wird, **dadurch gekennzeichnet, dass** während des Temperns der Kunststoffvorformling eingeblasener Luft ausgesetzt wird, welche mit eine Heizrate von 5 bis 20°C/min. von Raumtemperatur bis zu 85 bis 100°C erwärmt wird, wo die Vorform für 3 bis 10 Minuten belassen wird, und danach die eingeblasene Luft graduell mit einer Kühlrate von 10 bis 15°C/min. abgekühlt wird.

2. Verfahren zur Herstellung eines laminierten, auf Biomasse basierendem Kunststoff-Formkörpers nach Anspruch 1, wobei der Kunststoffvorformling innere und äußere Schichten umfasst, wobei die äußere Schicht aus Polymilchsäure mit 25 Gew.-% oder mehr zusammengesetzt ist, während die innere Schicht aus Polyolefinharz besteht.

3. Verfahren zur Verstellung eines laminierten, auf Biomasse basierendem Kunststoff-Formkörpers nach Anspruch 1 oder Anspruch 2, wobei die Polyolefinharze Polyethylen, Polypropylen, Polyethylen-Propylen und Ähnliches einschließen.

4. Verfahren zur Herstellung eines laminierten, auf Biomasse basierendem Kunststoff-Formkörpers nach Anspruch 1 oder Anspruch 2, wobei der auf Biomasse basierende Kunststoff-Formkörper eine Flasche ist.

5. Verfahren zur Herstellung eines laminierten, auf Biomasse basierendem Kunststoff-Formkörpers nach einem der vorhergehenden Ansprüche, weiter umfassend eine oder mehrere Haftschichten.

## Revendications

1. Procédé de fabrication d'un moulage stratifié de plastique dérivé d'une biomasse par formation par extrusion-soufflage, **caractérisé en ce qu'**une préforme est moulée à partir de plastique en une forme stratifiée de sorte à avoir au moins une des couches se composant de 25 % en poids ou plus d'acide polylactique et les couches restantes se composant de résines de polyoléfine, et **en ce que** la préforme de plastique subit un recuit **caractérisé en ce que** pendant le recuit, la préforme de plastique est exposée à un air soufflé chauffé à un taux de 5 à 20°C/min à partir de la température ambiante jusqu'à 85 à 100°C, température à laquelle la préforme est laissée pendant 3 à 10 minutes, et ensuite, l'air soufflé est progressivement refroidi au taux de 10 à 15°C/min.

2. Procédé de fabrication d'un moulage stratifié de plastique dérivé d'une biomasse selon la revendication 1, dans lequel la préforme de plastique se compose de couches interne et externe, la couche externe se composant de 25 % en poids ou plus d'acide polylactique, tandis que la couche interne est une résine de polyoléfine.

3. Procédé de fabrication d'un moulage stratifié de plastique dérivé d'une biomasse selon la revendication 1 ou la revendication 2, dans lequel les résines de polyoléfine comprennent du polyéthylène, du polypropylène, un mélange de polyéthylène-polypropylène et analogues.

4. Procédé de fabrication d'un moulage stratifié de plastique dérivé d'une biomasse selon la revendication 1 ou la revendication 2, dans lequel le moulage en plastique dérivé d'une biomasse est une ou plusieurs bouteilles.

5. Procédé de fabrication d'un moulage stratifié de plastique dérivé d'une biomasse selon l'une quelconque des revendications précédentes, comprenant en outre une ou plusieurs couches adhésives.
